(19)

Europäisches Patentamt
European Patent Office
Office européen des brevets

(11) **EP 2 922 219 B1**

(12) **EUROPEAN PATENT SPECIFICATION**

(45) Date of publication and mention of the grant of the patent:
**20.02.2019 Bulletin 2019/08**

(21) Application number: **13805082.8**

(22) Date of filing: **15.08.2013**

(51) Int Cl.:
*H04B 10/2543* (2013.01)    *H04B 10/299* (2013.01)
*H04B 10/2513* (2013.01)    *H04B 10/61* (2013.01)

(86) International application number:
**PCT/CN2013/081517**

(87) International publication number:
**WO 2013/185734 (19.12.2013 Gazette 2013/51)**

(54) **DISPERSION AND NONLINEARITY COMPENSATION METHOD AND SYSTEM IN A COHERENT OPTICAL COMMUNICATION SYSTEM**

VERFAHREN UND SYSTEM FÜR DISPERSION UND NICHTLINEARITÄTSKOMPENSATION IN EINEM KOHÄRENTEN OPTISCHEN ÜBERTRAGUNGSSYSTEM

PROCÉDÉ ET SYSTÈME DE COMPENSATION DE DISPERSION ET DE NON-LINÉARITÉ DANS UN SYSTÈME DE COMMUNICATION OPTIQUE COHÉRENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2012 CN 201210468694**

(43) Date of publication of application:
**23.09.2015 Bulletin 2015/39**

(73) Proprietor: **ZTE Corporation**
**Shenzhen, Guangdong 518057 (CN)**

(72) Inventors:
- **SHEN, Bailin**
  **Shenzhen**
  **Guangdong 518057 (CN)**
- **YU, Song**
  **Shenzhen**
  **Guangdong 518057 (CN)**
- **YANG, Jie**
  **Shenzhen**
  **Guangdong 518057 (CN)**
- **LI, Minliang**
  **Shenzhen**
  **Guangdong 518057 (CN)**

(74) Representative: **J A Kemp**
**14 South Square**
**Gray's Inn**
**London WC1R 5JJ (GB)**

(56) References cited:
EP-A1- 2 495 888          CN-A- 102 420 660
CN-A- 102 655 432        CN-A- 102 983 910
US-A1- 2010 239 254    US-A1- 2011 255 879
US-A1- 2012 051 742

- **LEI LI ET AL: "Implementation efficient nonlinear equalizer based on correlated digital backpropagation", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946720, ISBN: 978-1-4577-0213-6**
- **VINEGONI C ET AL: "Measurements of the nonlinear coefficient of standard, SMF, DSF, and DCF fibers using a self-aligned interferometer and a Faraday mirror", IEEE PHOTONICS TECHNOLOGY LETTERS, IEEE SERVICE CENTER, PISCATAWAY, NJ, US, vol. 13, no. 12, 1 December 2001 (2001-12-01), pages 1337-1339, XP011432285, ISSN: 1041-1135, DOI: 10.1109/68.969900**

**Description**

Technical Field

The present invention relates to the communication field, and in particular, to a dispersion and nonlinearity compensation method and system in a coherent optical communication system.

Background of the Related Art

The fiber optic communication system starts from the early 1970s, and adopts intensity-modulated semiconductor lasers, and the received light intensity signal is converted to the electric signal through photodiodes. This mode is known as the Intensity Modulation/Direct Detection (IM/DD), and is widely used in the current commercial optical fiber communication system. While the IM/DD has its inherent deficiencies, for example, the reception and the sensitivity are limited by the noise, the Spectral Efficiency is not high, the bandwidth cannot be fully utilized, etc. The coherent detection receives the extensive concern of people, on the one hand, it is because that the coherent detection allows the system to adopt the higher rank modulation format to improve the spectral efficiency, on the other hand, the coherent detection can improve the signal to noise ratio (SNR).

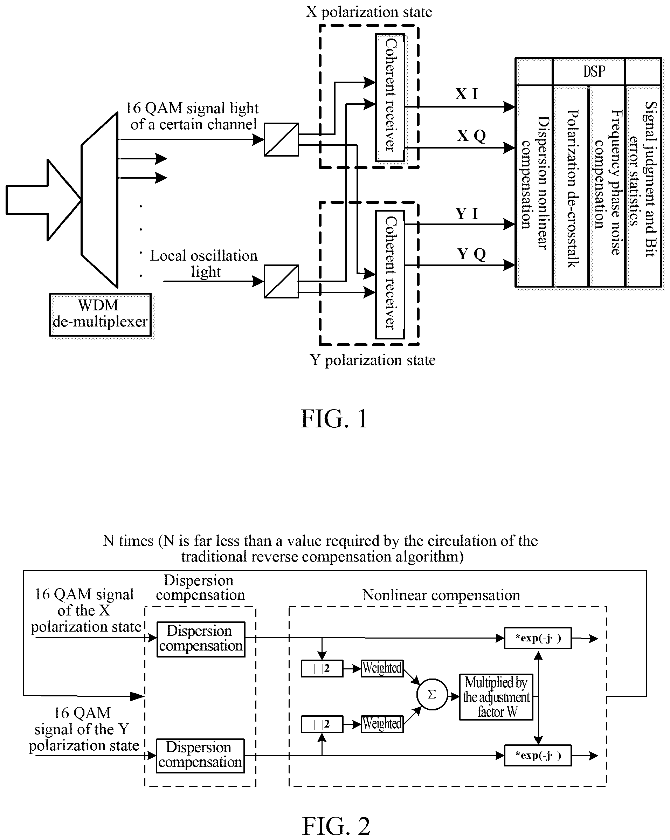

The principle of the polarization multiplexing wavelength division multiplexing coherent reception system is shown in FIG. 1. The optical wavelength division de-multiplexing is performed on the received signal at first, to obtain the signal light of each channel, and then the polarization beam splitter is utilized to receive the polarization multiplexing to obtain the signal lights of X and Y polarization states respectively, and the local oscillation light should be combined with the polarization beam splitter to obtain the local oscillation lights of the X and Y polarization states with same step and same intensity at the same time. Then the signal lights of the X and Y polarization states and the local oscillation lights will enter the coherent receiver corresponding to the polarization state respectively to perform the coherent demodulation, to obtain the four signals, X I, X Q, Y I and Y Q, of the channel after the coherent demodulation is performed. And Digital Signal Processing (DSP) is performed on the four signals, including dispersion nonlinearity compensation, de-polarization crosstalk and frequency phase noise compensation. Today, there are comparatively mature solutions for frequency phase noise and polarization crosstalk, the influence of the dispersion and nonlinear effect on the optical signal has already become a major factor of constraining the development of the coherent optical communication system at a high speed.

The influence of the nonlinear effect can be described by the simplified Non Linear Schrodinger Equation (NLSE) -- $i\partial A / \partial z + i\alpha A / 2 - \beta_2 \partial^2 A / 2\partial T^2 + \gamma |A|^2 A = 0$, wherein, $A$ is a complex envelope of the signal light, $\beta_2$ is a coefficient associated with the dispersion, and $T$ is a normalized time. It is obvious that the nonlinear effect will make the phase of the signal light change in association with the amplitude, and the dispersion will influence the amplitude of the signal light as well at the same time. The dispersion and the nonlinear taking effect simultaneously increases the complexity of the problem, and meanwhile the compensation for the two is more difficult to be performed at the same time.

As one of the technologies with a promising future in the new generation of the high-speed digital coherent optical communication system, the Quadrature Amplitude Modulation (16QAM) format of the polarization multiplexing wavelength division multiplexing has attracted extensive research because of its higher modulation order and extremely high spectrum efficiency. With the development of the digital signal processing technology, in the system which leaves out the polarization mode dispersion, there have been the comparatively mature processing schemes for the polarization crosstalk and the frequency phase noise, and the influence caused by the dispersion and the nonlinear effect taking effect simultaneously have already become the major factor of constraining the development of the high-speed digital coherent optical communication system. In view of the cost of the real commercial system, the complexity of the compensation algorithm of the dispersion and the nonlinear may not be too high while guaranteeing the compensation precision. In the latest research achievement, the associated researchers have proposed the compensation method for the dispersion and the nonlinear one after another, and these methods can be divided into three kinds in general.

The lumped nonlinearity compensation method is mainly used to compensate for the phase noise caused by the Self-Phase Modulation (SPM) effect through a phase modulator, and an additional phase of its phase modulation is directly related to the intensity of the signal. The method can be used to compensate for the influence caused by the SPM effect in the electric domain or the optical domain with a lower complexity, however, the method neglects the influence of the dispersion during the transmission, and is only suitable for a low dispersion system or a system that the dispersion is already compensated, and the compensation result is not good enough.

In the filter compensation method based on the Volterra series, the filter accorded with the Volterra series structure is constructed at first, to obtain the tapping coefficient which can compensate for the nonlinear effect of the current system through a training sequence, then the filter on which the training has been performed is used to compensate for the real data, and the dynamic update of the filter coefficient is kept in order to guarantee that the filter can maintain the effectiveness of the compensation all the time at the same time. The Minimum Mean Square Error (LMS) algorithm is uniformly adopted to update the filter coefficient. The method fully utilizes the modeling ability and the compensation ability of the Volterra series on the nonlinear system, the algorithm complexity is low, and the compensation result is good, however, the dispersion compensation requires to be used to compensate for the dispersion of the optic fiber compensation system, which increases the hardware complexity of the system, and the compensation ability for the Wavelength Division Multiplexing (WDM) system is not good enough at the same time.

A basic principle of the reverse transmission nonlinearity compensation method based on the Split-Step Fourier Method (SSFM) can be represented by a reverse transmission formula -- $\partial E / \partial z = (\hat{D}^{-1} + \hat{N}^{-1})E$ for deducing the NLSE, wherein, $\hat{D}^{-1} = \alpha / 2 + i\beta_2\partial^2 / 2!\partial t^2 - \beta_3\partial_3 / 3!\partial t^3$ and $\hat{N}^{-1} = -i\gamma|E|^2$ are the reverse operators for compensating for the dispersion and the nonlinear. What is adopted is the SSFM in actual compensation, that is, the optic fiber is divided into n sub-sections, supposing that the dispersion and the nonlinear work separately when the optical domain passes each infinitesimal element of the optic fiber to obtain the similar result. That is, in each infinitesimal element of the optic fiber, the traditional dispersion compensation is performed on all sampling points by combining with the dispersion compensation operator first, then the nonlinear phase angle is obtained by calculating the power of each point, and then the reverse compensation is performed.

The reverse transmission compensation method can process the dispersion and the nonlinear simultaneously without the need of the dispersion compensation optic fiber, which reduces the cost of the hardware, and the compensation precision is higher; after being appropriately deformed, the compensation method still can be suitable for the system of processing the polarization multiplexing and the wavelength division multiplexing, and it has an extensive applicability. However, the algorithm complexity is very high; the relevant analysis shows that, in a single-carrier system, for a sampling point array with N points, complexity of the processing in the single optic fiber infinitesimal element is $14N + 3[(N + P)\log_2(N + P)+(N + P)]$; wherein, P is the number of the extra sampling points for overhead. In combination with the total number of compensation spans and the number of cycles, the reverse transmission compensation method will bring about a high compution overhead.

The document "LEI LI ET AT: implementation efficient nonlinear equalizer based on correlated digital backpropagation" discloses a method to reduce the required stage number down to 1/4 without affecting the compensation performance.

The document US2012051742A1 discloses an apparatus for self-phase modulation noise calculation, an apparatus for self-phase modulation noise elimination and optical coherent receiver. The apparatus for calculation comprises: a signal receiver to receive an input signal; a calculator connected to the signal receiver to calculate a self-phase modulation noise at the current instant by using the signal powers of an input signal waveform at the current instant and at several sampling instants adjacent to the current instant.

Summary of the Invention

The embodiment of the present invention provides a dispersion and nonlinearity compensation method according to claim 1 and system in a coherent optical communication system according to claim 6, to overcome the defects, for example, the calculation complexity of the current algorithm is high, the dispersion compensation optical fiber is required to compensate for the dispersion, etc. Further improvements and embodiments are provided in the dependent claims.

Also provided is a dispersion and nonlinearity compensation method in a coherent optical communication system, which comprises:

dividing a total length of an optical fiber into N spans with equal lengths, and in each span, firstly performing dispersion compensation on every data point within the span according to a dispersion compensation operator, and then performing nonlinearity compensation;
wherein, the step of performing nonlinearity compensation in each span comprises:

with a position of a current sampling point being a center, performing sampling on respective 2k+1 sampling points of X and Y polarization states, calculating powers of 2(2k+1) sampling points, adding powers of sampling points at a same position on X and Y polarization states to obtain 2k+1 power values, performing weighted summation on the 2k+1 power values, then multiplying the weighted sum by a preset coefficient W to obtain a nonlinear phase angle of the current sampling point, and performing compensation according to the nonlinear phase angle;
wherein, N and k are positive integers.

Alternatively, the above-mentioned step of performing weighted summation on the 2k+1 power values and then multiplying the weighted sum by a preset coefficient W to obtain a nonlinear phase angle of the current sampling point comprises: calculating the nonlinear phase angle of the current sampling point according to the following calculation

formula:

$$W*[w_{-k}(|x_{-k}|^2+|y_{-k}|^2)+w_{-(k-1)}(|x_{-(k-1)}|^2+|y_{-(k-1)}|^2)+...+w_0(|x_0|^2+|y_0|^2)+...+w_k(|x_k|^2+|y_k|^2)]$$,

in the above formula, wi(i=-k,-(k-1)...0...k) represents a weighted coefficient of the power value of the sampling point, xi(i=-k,-(k-1)...0...k) represents a sampling value of the X polarization state, and yi(i=-k,-(k-1)...0...k) represents a sampling value of the Y polarization state;

wherein, the weighted coefficient of the power value of every sampling point is in inverse proportion to a distance between the sampling point and the current sampling point.

Alternatively, in the above-mentioned method, N is an integer, and $2 \leq N \leq 5$.

Alternatively, in the above-mentioned method, K is an integer, and $1 \leq k \leq 10$.

Alternatively, in the above-mentioned method, the weighted coefficient of the power value of every sampling point is a positive number greater than 0.

Also provided is a dispersion and nonlinearity compensation system in a coherent optical communication system, which comprises:

a first module, configured to: divide a total length of an optical fiber into N spans with equal lengths;

a second module, configured to: in each span, perform dispersion compensation on every data point within the span according to a dispersion compensation operator, and

a third module, configured to: perform nonlinearity compensation in each span;

wherein, the third module is configured to perform nonlinearity compensation in each span by means of:

with a position of a current sampling point being a center, performing sampling on respective 2k+1 sampling points of X and Y polarization states, calculating powers of 2(2k+1) sampling points, adding powers of sampling points at a same position on X and Y polarization states to obtain 2k+1 power values, performing weighted summation on the 2k+1 power values, then multiplying the weighted sum by a preset coefficient W to obtain a nonlinear phase angle of the current sampling point, and performing compensation according to the nonlinear phase angle;

wherein, N and k are positive integers.

Alternatively, in the above-mentioned system, the third module is configured to calculate the nonlinear phase angle of the current sampling point according to the following calculation formula:

$$W*[w_{-k}(|x_{-k}|^2+|y_{-k}|^2)+w_{-(k-1)}(|x_{-(k-1)}|^2+|y_{-(k-1)}|^2)+...+w_0(|x_0|^2+|y_0|^2)+...+w_k(|x_k|^2+|y_k|^2)]$$,

in the above formula, wi(i=-k,-(k-1)...0...k) represents a weighted coefficient of the power value of the sampling point, xi(i=-k,-(k-1)...0...k) represents a sampling value of the X polarization state, and yi(i=-k,-(k-1)...0...k) represents a sampling value of the Y polarization state;

wherein, the weighted coefficient of the power value of every sampling point is in inverse proportion to a distance between the sampling point and the current sampling point.

Alternatively, in the above-mentioned system, N is an integer, and $2 \leq N \leq 5$.

Alternatively, in the above-mentioned system, K is an integer, and $1 \leq k \leq 10$.

Alternatively, in the above-mentioned system, the weighted coefficient of the power value of every sampling point is a positive number greater than 0.

In the technical schemes of the embodiments of the present invention, the dispersion compensation optical fiber is not required to compensate for the dispersion, which improves the mode for calculating the nonlinear phase angle, increases the span and thus reduces the calculation complexity, and is suitable for a polarization multiplexing wavelength division multiplexing system of the 16QAM format.

Brief Description of Drawings

FIG. 1 is a principle diagram of a polarization multiplexing wavelength division multiplexing coherent reception system;

FIG. 2 is a principle diagram of a dispersion and nonlinearity compensation method of a polarization multiplexing wavelength division multiplexing system in a 16QAM format provided by an embodiment of the present invention;

FIG. 3 is a diagram of an influence on dispersion and nonlinearity compensation effects by different OSNRs;

FIG. 4 is a constellation diagram of X and Y polarization states after the compensation method of FIG. 2 is performed when the signal to noise ratio is 25.16dB.

Preferred Embodiments of the Invention

The embodiment of the present invention is described in detail with reference to the accompanying drawings hereinafter. It should be illustrated that, in the case of not conflicting, the embodiments in the present application and features in these embodiments can be combined with each other arbitrarily.

Embodiment 1

The present embodiment describes a dispersion and nonlinearity compensation method in a coherent optical communication system, and the principle of the scheme is shown in FIG. 2. The dispersion and the nonlinearity are compensated by adopting the dispersion and nonlinearity compensation algorithm with the low complexity in the polarization multiplexing wavelength division multiplexing system of the 16QAM format with the method, and the compensation procedure is illustrated as follows.

First, the total length of an optical fiber is divided into N spans with equal lengths (N is far less than a value required by the traditional reverse compensation algorithm), that is, N spans with the same length, the dispersion and nonlinear effects are compensated separately in each span, and the dispersion compensation is performed on all data points according to the dispersion compensation operator in the span, and then the nonlinearity compensation is performed. Wherein, when the nonlinearity compensation is performed, it is no longer like the traditional reverse transmission compensation method in which the nonlinear phase angle is calculated just by using the power of the current sampling point, instead, a position of the current sampling point is regarded as a center, the sampling is performed on respective 2k+1 sampling points of the X and Y polarization states, the powers of the 2(2k+1) sampling points are calculated, the powers of sampling points at the same position on X and Y polarization states are added to obtain the 2k+1 power values, then the weighted summation is performed on the 2k+1 power values, and then the weighted sum is multiplied by a preset coefficient W to obtain a nonlinear phase angle of the current sampling point, and the compensation is performed just according to the nonlinear phase angle; wherein, N and k are positive integers.

The nonlinear phase angle of the current sampling point can be calculated according to the following calculation formula:

$$W*[w_{-k}(|x_{-k}|^2 + |y_{-k}|^2) + w_{-(k-1)}(|x_{-(k-1)}|^2 + |y_{-(k-1)}|^2) + ... + w_0(|x_0|^2 + |y_0|^2) + ... + w_k(|x_k|^2 + |y_k|^2)]$$,

in the above formula, wi(i=-k,-(k-1)...0...k) represents the weighted coefficient at the corresponding position, xi(i=-k,-(k-1)...0...k) represents the sampling value of the X polarization state, and yi(i=-k,-(k-1)...0...k) represents the sampling value of the Y polarization state. It should be illustrated that the weighted coefficient of the power value of every sampling point is a positive number greater than 0, and can be determined according to experience. However, in the preferred scheme of the present embodiment, it is proposed that the weighted coefficient of the power value of every sampling point is in inverse proportion to the distance between the sampling point and the current sampling point. That is, the larger the distance between the sampling point and the position of the current sampling point is, the smaller the weighted coefficient configured for its power value is; while the closer the distance between the sampling point and the position of the current sampling point is, then the larger the weighted coefficient configured for its power value is.

In addition, it can be known from FIG. 2 that, the complexity of the dispersion and nonlinearity compensation is directly proportional to the number N of the divided spans; the compensation span value of the traditional reversion compensation algorithm is smaller, the total number of the spans is greater, therefore, the calculation amount is very large. And the preferred scheme of the present embodiment limits the value of N, and recommends that N is an integer greater than or equal to 2 and less than or equal to 5 preferably, thus reducing the calculation complexity greatly and reducing the calculation amount and increasing the compensation efficiency.

Besides reducing the calculation complexity by limiting the value of N, the present embodiment increases the compensation extent for the nonlinear phase angle of the single span by performing weighted summation on the powers, also reduces the total number of spans greatly, and lowers the complexity. And in some preferred schemes, in the process of calculating the nonlinear phase angle, respective 2k +1 sampling points of the X and Y polarization states with the position of the current sampling point being the center are also limited, that is, the number of sampling points can neither be too large nor be too small, what is recommended is 1≤k≤10 preferably, and k is an integer.

At the same time, in the process of calculating the nonlinear phase angle, besides the weighted coefficient of the power value of every sampling point, there is also an important parameter, that is, the coefficient W (can also be called the adjustment factor) is preset, and the value of the W is set as different values as application systems change, that is, an appropriate W is set according to different system configurations (for example, in-fiber power, transmission length and signal to noise ratio of the system, etc., of every polarization state) so long as the value of the set W is guaranteed to enable the system performance to achieve the best, and in this way, the system flexibility and the applicable scope can be increased greatly.

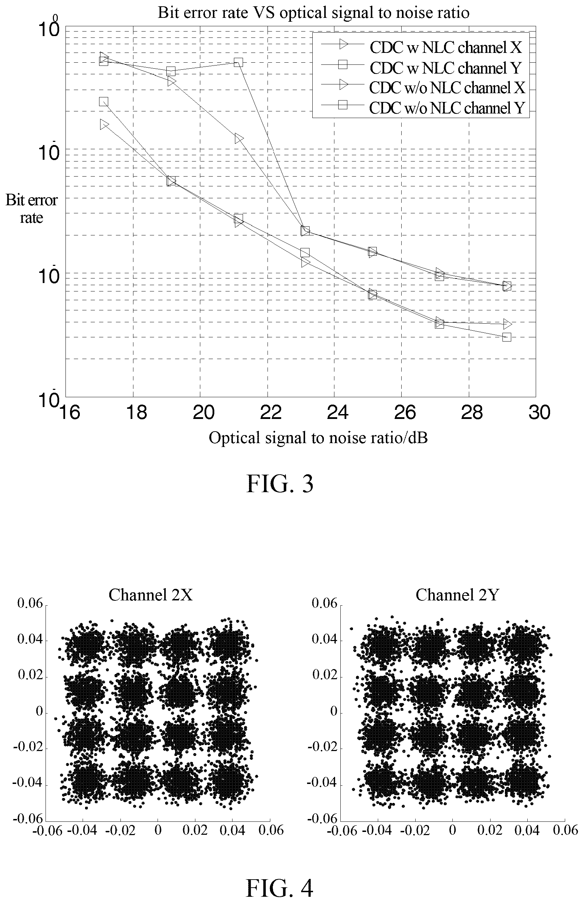

Now referring to FIG. 3 hereinafter, the influence on the dispersion and nonlinearity compensation effect by different Optical Signal to Noise Ratio (OSNR) of the polarization multiplexing wavelength division multiplexing system of the 16QAM can be seen. The line width of the laser appeared in FIG. 3 is 100kHz, the transmission length is 1000km, the in-fiber light power of each polarization state is 1dBm, the symbol length is 8192, and the symbol rate is 180Gbaud. The system can keep the error rate on the order of magnitude of $10^{-3}$ within a certain signal to noise ratio range.

FIG. 4 shows a constellation diagram situation of the system of the X and Y polarization states after the dispersion and nonlinearity compensation method as shown in FIG. 2 is performed when the signal to noise ratio is 25.16dB. The line width of the laser appeared in the figure is 100kHz, the transmission length is 1000km, the in-fiber light power of each polarization state is IdBm, the symbol length is 8192, and the symbol rate is 180Gbaud. It can be seen that the dispersion degree of the constellation diagram after processed by the compensation algorithm is good, the error rate of the system is also on the order of magnitude of $10^{-3}$ at the same time.

Embodiment 2

The present embodiment describes a dispersion and nonlinearity compensation system in a coherent optical communication system, which at least includes:

a first module, configured to: divide a total length of an optical fiber into N spans with equal lengths;

a second module, configured to: in each span, perform dispersion compensation on each data point within the span according to a dispersion compensation operator, and

a third module, configured to: perform nonlinearity compensation in each span;

wherein, the third module is configured to perform nonlinearity compensation in each span by the following mode: with a position of a current sampling point being a center, performing sampling on respective 2k+1 sampling points of X and Y polarization states, calculating powers of 2(2k+1) sampling points, adding powers of sampling points at a same position on X and Y polarization states to obtain 2k+1 power values, performing weighted summation on the 2k+1 power values, then multiplying the weighted sum by a preset coefficient W to obtain a nonlinear phase angle of the current sampling point, and performing compensation according to the nonlinear phase angle; wherein, N and k are positive integers.

The third module is configured to calculate the nonlinear phase angle of the current sampling point according to the following calculation formula:

$$W*[w_{-k}(|x_{-k}|^2+|y_{-k}|^2)+w_{-(k-1)}(|x_{-(k-1)}|^2+|y_{-(k-1)}|^2)+...+w_0(|x_0|^2+|y_0|^2)+...+w_k(|x_k|^2+|y_k|^2)]$$ ,

in the above formula, wi(i=-k,-(k-1)...0...k) represents the weighted coefficient at the corresponding position, xi(i=-k,-(k-1)...0...k) represents the sampling value of the X polarization state, and yi(i=-k,-(k-1)...0...k) represents the sampling value of the Y polarization state. It should be illustrated that the weighted coefficient of the power value of every sampling point is a positive number greater than 0, and can be determined according to experience. However, in the preferred scheme of the present embodiment, it is proposed that the weighted coefficient of the power value of every sampling point is in inverse proportion to the distance between the sampling point and the current sampling point. That is, the larger the distance between the sampling point and the position of the current sampling point, the smaller the weighted coefficient configured for its power value is; while the closer the distance between the sampling point and the position of the current sampling point, then the bigger the weighted coefficient configured for its power value is.

In addition, the complexity of the dispersion and nonlinearity compensation is directly proportional to the divided span number N; the compensation span value of the traditional reversion compensation algorithm is smaller, the total number of the spans is more, therefore, the calculation amount is very big. And the preferred scheme of the present embodiment limits the value of N, and recommends N to be an integer greater than or equal to 2 and less than or equal to 5 preferably, thus reducing the calculation complexity greatly and reducing the calculation amount and increasing the compensation efficiency.

Besides reducing the calculation complexity by limiting the value of N, in the preferred scheme of the present embodiment, in the process of calculating the nonlinear phase angle, respective 2k +1 sampling points of the X and Y polarization states with the position of the current sampling point being the center are also limited, that is, the number of sampling points cannot be too large and cannot be too small either, which is recommended as $1 \leq k \leq 10$ preferably, and k is the integer.

In addition, in the process of calculating the nonlinear phase angle, there is also an important parameter, that is, the coefficient W (can also be called the adjustment factor) is preset, and the value of the W is set as different values as application systems change, that is, an appropriate W is set according to different system configurations (for example, in-fiber power, transmission length and signal to noise ratio of the system, etc., of every polarization state) so long as the value of the set W is guaranteed to enable the system performance to achieve the best, and in this way, the system flexibility and the applicable scope can be increased greatly.

It can be seen from the above-mentioned embodiments, in the technical schemes of the embodiments of the present invention, the dispersion compensation optical fiber is not required to compensate the dispersion, which is especially suitable for the polarization multiplexing wavelength division multiplexing coherent optical communication system of the 16QAM, and the huge calculation amount in the traditional reverse transmission compensation method caused by less compensation when splitting the optical fiber is avoided; the powers of these 2(2k +1) sampling points are calculated through taking the powers of respective 2k +1 (the value of k needs to be adjusted according to the specific system, and the value of k is 10 in the present system) sampling points of the X and Y polarization states with the position of the current sampling point being the center, the powers of the sampling points at the same position on the X and Y polarization states are added to obtain the 2k +1 power values, then the weighted sum of the 2k +1 power values is calculated, and the nonlinear phase angle of the current sampling point is obtained by multiplying the weighted sum by an adjustment factor W; the compensation extent for the nonlinear phase angle in each compensation cycle is increased greatly by calculating with such calculation method, and the total number of compensation spans and calculation amount are reduced. The adjustment factor W can be adjusted according to different systems.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The above description is only for the preferred embodiments of the present invention and is not intended to limit the present invention. For those skilled in the art, the present invention can have various modifications and variations. All of modifications, equivalents and/or variations without departing from the spirit and essence of the present invention should be embodied in the scope of the appended claims of the present invention.

Industrial Applicability

In the technical schemes of the embodiments of the present invention, the dispersion compensation optical fiber is not required to compensate for the dispersion, which improves the mode of calculating the nonlinear phase angle, increases the span and thus reduces the calculation complexity.

**Claims**

1.  A dispersion and nonlinearity compensation method in a coherent optical communication system, comprising:

    dividing a total length of an optical fiber into N spans with equal lengths, and in each span, firstly performing dispersion compensation on every data point within the span according to a dispersion compensation operator, and then performing nonlinearity compensation;
    wherein, the step of performing nonlinearity compensation in each span comprises:

    with a position of a current sampling point being a center, performing sampling on respective 2k+1 sampling points of X and Y polarization states, calculating powers of 2(2k+1) sampling points, adding powers of sampling points at a same position on X and Y polarization states to obtain 2k+1 power values, performing weighted summation on the 2k+1 power values, then multiplying the weighted sum by a preset coefficient W to obtain a nonlinear phase angle of the current sampling point, and performing compensation according to the nonlinear phase angle;
wherein, N and k are positive integers;
**characterized in that** the preset coefficient W is set according to different system configurations, the system configurations comprising an in-fiber power of every polarization state, transmission length and signal to noise ratio of the system.

2. The method according to claim 1, wherein, the step of performing weighted summation on the 2k+1 power values and then multiplying the weighted sum by a preset coefficient W to obtain a nonlinear phase angle of the current sampling point comprises: calculating the nonlinear phase angle of the current sampling point according to the following calculation formula:

$$W * [w_{-k}(|x_{-k}|^2 + |y_{-k}|^2) + w_{-(k-1)}(|x_{-(k-1)}|^2 + |y_{-(k-1)}|^2) + ... + w_0(|x_0|^2 + |y_0|^2) + ... + w_k(|x_k|^2 + |y_k|^2)]$$ ,

in the above formula, wi(i=-k,-(k-1)...0...k) represents a weighted coefficient of the power value of the sampling point, xi(i=-k,-(k-1)...0...k) represents a sampling value of the X polarization states and yi(i=-k,-(k-1)...0...k) represents a sampling value of the Y polarization state;
wherein, the weighted coefficient of the power value of every sampling point is in inverse proportion to a distance between the sampling point and the current sampling point.

3. The method according to claim 1 or 2, wherein,
N is an integer, and $2 \leq N \leq 5$.

4. The method according to claim 1 or 2, wherein,
K is an integer, and $1 \leq k \leq 10$.

5. The method according to claim 2, wherein,
the weighted coefficient of the power value of every sampling point is a positive number greater than 0.

6. A dispersion and nonlinearity compensation system in a coherent optical communication system, comprising:

a first module, configured to: divide a total length of an optical fiber into N spans with equal lengths;
a second module, configured to: in each span, perform dispersion compensation on every data point within the span according to a dispersion compensation operator, and
a third module, configured to: perform nonlinearity compensation in each span;
wherein, the third module is configured to perform nonlinearity compensation in each span by means of:

with a position of a current sampling point being a center, performing sampling on respective 2k+1 sampling points of X and Y polarization states, calculating powers of 2(2k+1) sampling points, adding powers of sampling points at a same position on X and Y polarization states to obtain 2k+1 power values, performing weighted summation on the 2k+1 power values, then multiplying the weighted sum by a preset coefficient W to obtain a nonlinear phase angle of the current sampling point, and performing compensation according to the nonlinear phase angle;
wherein, N and k are positive integers;
**characterized in that** the preset coefficient W is set according to different system configuration, the system configurations comprising an in-fiber power of every polarization state, transmission length and signal to noise ratio of the system.

7. The system according to claim 6, wherein, the third module is configured to calculate the nonlinear phase angle of the current sampling point according to the following calculation formula:

$$W * [w_{-k}(|x_{-k}|^2 + |y_{-k}|^2) + w_{-(k-1)}(|x_{-(k-1)}|^2 + |y_{-(k-1)}|^2) + ... + w_0(|x_0|^2 + |y_0|^2) + ... + w_k(|x_k|^2 + |y_k|^2)]$$ ,

in the above formula, wi(i=-k,-(k-1)...0...k) represents a weighted coefficient of the power value of the sampling point, xi(i=-k,-(k-1)...0...k) represents a sampling value of the X polarization state, and yi(i=-k,-(k-1)...0...k) represents a sampling value of the Y polarization state;
wherein, the weighted coefficient of the power value of every sampling point is in inverse proportion to a distance between the sampling point and the current sampling point.

8. The system according to claim 6 or 7, wherein,
N is an integer, and $2 \leq N \leq 5$.

9. The system according to claim 6 or 7, wherein,
K is an integer, and $1 \leq k \leq 10$.

10. The system according to claim 7, wherein,
the weighted coefficient of the power value of every sampling point is a positive number greater than 0.

**Patentansprüche**

1. Dispersions- und Nichtlinearitäts-Kompensationsverfahren in einem kohärenten optischen Kommunikationssystem, umfassend:

   Aufteilen einer Gesamtlänge eines Lichtwellenleiters in N Strecken mit gleichen Längen und in jeder Strecke zuerst Durchführen einer Dispersionskompensation an jedem Datenpunkt in der Strecke gemäß einem Dispersionskompensationsbetreiber und dann Durchführen einer Nichtlinearitätskompensation;
   wobei der Schritt des Durchführens einer Nichtlinearitätskompensation in jeder Strecke Folgendes umfasst:

   mit einer Position einer aktuellen Probenahmestelle als eine Mitte, Durchführen einer Probenahme an entsprechenden 2k+1 Probenahmestellen von X und Y Polarisationszuständen, Berechnen von Potenzen von 2(2k+1) Probenahmestellen, Hinzufügen von Potenzen von Probenahmestellen an einer gleichen Position an X und Y Polarisationszuständen, um 2k+1 Potenzwerte zu erhalten, Durchführen von gewichteter Summierung an den 2k+1 Potenzwerten, dann Multiplizieren der gewichteten Summe mit einem voreingestellten Koeffizienten W, um einen nichtlinearen Phasenwinkel der aktuellen Probenahmestelle zu erhalten, und Durchführen der Kompensation gemäß dem nichtlinearen Phasenwinkel;
   wobei N und k positive Ganzzahlen sind;
   **dadurch gekennzeichnet, dass** der voreingestellte Koeffizient W gemäß verschiedenen Systemkonfigurationen eingestellt ist, wobei die Systemkonfigurationen eine Leistung in den Fasern von jedem Polarisationszustand, eine Übertragungslänge und ein Signal-Rausch-Verhältnis des Systems umfassen.

2. Verfahren nach Anspruch 1, wobei der Schritt des Durchführens von gewichteter Summierung an den 2k+1 Potenzwerten und dann des Multiplizierens der gewichteten Summe mit einem voreingestellten Koeffizienten W, um einen nichtlinearen Phasenwinkel der aktuellen Probenahmestelle zu erhalten, Folgendes umfasst: Berechnen des nichtlinearen Phasenwinkels der aktuellen Probenahmestelle gemäß der folgenden Berechnungsformel:

$$W * [w_{-k}(|x_{-k}|^2 + |y_{-k}|^2) + w_{-(k-1)}(|x_{-(k-1)}|^2 + |y_{-(k-1)}|^2) + ... + w_0(|x_0|^2 + |y_0|^2) + ... + w_k(|x_k|^2 + |y_k|^2)]$$

in der oben stehenden Formel stellt wi(i=-k,-(k-1)...0...k) einen gewichteten Koeffizienten des Potenzwerts der Probenahmestelle dar, xi(i=-k,-(k-1)...0...k) stellt einen Probenahmewert der X Polarisationszustände dar und yi(i=-k, -(k-1)...0...k) stellt einen Probenahmewert des Y Polarisationszustands dar;
wobei der gewichtete Koeffizient des Potenzwerts von jeder Probenahmestelle umgekehrt proportional zu einem Abstand zwischen der Probenahmestelle und der aktuellen Probenahmestelle ist.

3. Verfahren nach Anspruch 1 oder 2, wobei
N eine Ganzzahl und $2 \leq N \leq 5$ ist.

4. Verfahren nach Anspruch 1 oder 2, wobei
K eine Ganzzahl und $1 \leq k \leq 10$ ist.

5. Verfahren nach Anspruch 2, wobei
der gewichtete Koeffizient des Potenzwerts von jeder Probenahmestelle eine positive Zahl größer als 0 ist.

**6.** Dispersions- und Nichtlinearitäts-Kompensationssystem in einem kohärenten optischen Kommunikationssystem, umfassend:

ein erstes Modul, konfiguriert, um: eine Gesamtlänge eines Lichtwellenleiters in N Strecken mit gleichen Längen aufzuteilen;

ein zweites Modul, konfiguriert, um: in jeder Strecke eine Dispersionskompensation an jedem Datenpunkt in der Strecke gemäß einem Dispersionskompensationsbetreiber durchzuführen und

ein drittes Modul, konfiguriert, um: eine Nichtlinearitätskompensation in jeder Strecke durchzuführen;

wobei das dritte Modul konfiguriert ist, um eine Nichtlinearitätskompensation in jeder Strecke durch Folgendes durchzuführen:

mit einer Position einer aktuellen Probenahmestelle als eine Mitte, Durchführen einer Probenahme an entsprechenden 2k+1 Probenahmestellen von X und Y Polarisationszuständen, Berechnen von Potenzen von 2(2k+1) Probenahmestellen, Hinzufügen von Potenzen von Probenahmestellen an einer gleichen Position an X und Y Polarisationszuständen, um 2k+1 Potenzwerte zu erhalten, Durchführen von gewichteter Summierung an den 2k+1 Potenzwerten, dann Multiplizieren der gewichteten Summe mit einem voreingestellten Koeffizienten W, um einen nichtlinearen Phasenwinkel der aktuellen Probenahmestelle zu erhalten, und Durchführen der Kompensation gemäß dem nichtlinearen Phasenwinkel;

wobei N und k positive Ganzzahlen sind;

**dadurch gekennzeichnet, dass** der voreingestellte Koeffizient W gemäß einer verschiedenen Systemkonfiguration eingestellt ist, wobei die Systemkonfigurationen eine Leistung in den Fasern von jedem Polarisationszustand, eine Übertragungslänge und ein Signal-Rausch-Verhältnis des Systems umfassen.

**7.** System nach Anspruch 6, wobei das dritte Modul konfiguriert ist, um den nichtlinearen Phasenwinkel der aktuellen Probenahmestelle gemäß der folgenden Berechnungsformel zu berechnen:

$$W * [w_{-k}(|x_{-k}|^2 + |y_{-k}|^2) + w_{-(k-1)}(|x_{-(k-1)}|^2 + |y_{-(k-1)}|^2) + \ldots + w_0(|x_0|^2 + |y_0|^2) + \ldots + w_k(|x_k|^2 + |y_k|^2)]$$

in der oben stehenden Formel stellt wi(i=-k,-(k-1)...0...k) einen gewichteten Koeffizienten des Potenzwerts der Probenahmestelle dar, xi(i=-k,-(k-1)...0...k) stellt einen Probenahmewert des X Polarisationszustands dar und yi(i=-k, -(k-1)...0...k) stellt einen Probenahmewert des Y Polarisationszustands dar;

wobei der gewichtete Koeffizient des Potenzwerts von jeder Probenahmestelle umgekehrt proportional zu einem Abstand zwischen der Probenahmestelle und der aktuellen Probenahmestelle ist.

**8.** System nach Anspruch 6 oder 7, wobei
N eine Ganzzahl und $2 \leq N \leq 5$ ist.

**9.** System nach Anspruch 6 oder 7, wobei
K eine Ganzzahl und $1 \leq k \leq 10$ ist.

**10.** System nach Anspruch 7, wobei
der gewichtete Koeffizient des Potenzwerts von jeder Probenahmestelle eine positive Zahl größer als 0 ist.

**Revendications**

**1.** Procédé de compensation de dispersion et de non-linéarité dans un système de communications optiques cohérentes, comprenant :

la division d'une longueur totale d'une fibre optique en N tronçons de longueurs égales, et dans chaque tronçon, d'abord la réalisation d'une compensation de dispersion sur chaque point de données dans le tronçon en fonction d'un opérateur de compensation de dispersion, et puis la réalisation d'une compensation de non-linéarité ;

l'étape de réalisation d'une compensation de non-linéarité dans chaque tronçon comprenant :

une position d'un point d'échantillonnage de courant étant le centre, la réalisation d'un échantillonnage sur les points d'échantillonnage respectifs 2k+1 des états de polarisation X et Y, le calcul de puissances de points d'échantillonnage 2(2k+1), l'ajout de puissances de points d'échantillonnage dans une même position sur les états de polarisation X et Y pour obtenir les valeurs de puissance 2k+1, la réalisation d'une addition pondérée des valeurs de puissance 2k+1, puis la multiplication de la somme pondérée par un coefficient prédéfini W pour obtenir un angle de phase non linéaire du point d'échantillonnage de courant, et la réalisation d'une compensation en fonction de l'angle de phase non linéaire ;

où N et k sont des nombres entiers positifs ;

**caractérisé en ce que** le coefficient prédéfini W est défini en fonction de différentes configurations système, les configurations système comprenant une puissance dans la fibre de chaque état de polarisation, une longueur de transmission et un rapport signal sur bruit du système.

2. Procédé selon la revendication 1, dans lequel, l'étape de réalisation d'une addition pondérée des valeurs de puissance 2k+1 et puis la multiplication de la somme pondérée par un coefficient prédéfini W pour obtenir un angle de phase non linéaire du point d'échantillonnage de courant comprend : le calcul de l'angle de phase non linéaire du point d'échantillonnage de courant en fonction de la formule de calcul suivante :

$$W * [w_{-k}(|x_{-k}|^2 + |y_{-k}|^2) + w_{-(k-1)}(|x_{-(k-1)}|^2 + |y_{-(k-1)}|^2) + ... + w_0(|x_0|^2 + |y_0|^2) + ... + w_k(|x_k|^2 + |y_k|^2)] \, ,$$

dans la formule ci-dessus, wi(i=-k,-(k-1)...0...k) représente un coefficient pondéré de la valeur de puissance du point d'échantillonnage, xi(i=-k,-(k-1)...0...k) représente une valeur d'échantillonnage des états de polarisation X, et yi(i=-k,-(k-1)...0...k) représente une valeur d'échantillonnage de l'état de polarisation Y ;

le coefficient pondéré de la valeur de puissance de chaque point d'échantillonnage étant inversement proportionnel à une distance entre le point d'échantillonnage et le point d'échantillonnage de courant.

3. Procédé selon la revendication 1 ou 2, dans lequel,
N est un nombre entier, et $2 \leq N \leq 5$.

4. Procédé selon la revendication 1 ou 2, dans lequel,
K est un nombre entier, et $1 \leq k \leq 10$.

5. Procédé selon la revendication 2, dans lequel,
le coefficient pondéré de la valeur de puissance de chaque point d'échantillonnage est un nombre positif supérieur à 0.

6. Système de compensation de dispersion et de non-linéarité dans un système de communications optiques cohérentes, comprenant :

un premier module, conçu pour : diviser une longueur totale d'une fibre optique en N tronçons de longueurs égales ;
un deuxième module, conçu pour : dans chaque tronçon, réaliser une compensation de dispersion sur chaque point de données dans le tronçon en fonction d'un opérateur de compensation de dispersion, et
un troisième module, conçu pour : effectuer une compensation de non-linéarité dans chaque tronçon ;
le troisième module étant conçu pour effectuer une compensation de non-linéarité dans chaque tronçon au moyen de :

une position d'un point d'échantillonnage de courant étant le centre, la réalisation d'un échantillonnage sur les points d'échantillonnage respectifs 2k+1 des états de polarisation X et Y, le calcul de puissances de points d'échantillonnage 2(2k+1), l'ajout de puissances de points d'échantillonnage dans une même position sur les états de polarisation X et Y pour obtenir les valeurs de puissance 2k+1, la réalisation d'une addition pondérée des valeurs de puissance 2k+1, puis la multiplication de la somme pondérée par un coefficient prédéfini W pour obtenir un angle de phase non linéaire du point d'échantillonnage de courant, et la réalisation d'une compensation en fonction de l'angle de phase non linéaire ;
où N et k sont des nombres entiers positifs ;
**caractérisé en ce que** le coefficient prédéfini W est défini en fonction d'une différente configuration système, les configurations système comprenant une puissance dans la fibre de chaque état de polarisation, une longueur de transmission et un rapport signal sur bruit du système.

7. Système selon la revendication 6, dans lequel le troisième module est conçu pour calculer l'angle de phase non linéaire du point d'échantillonnage de courant en fonction de la formule de calcul suivante :

$$W * [w_{-k}(|x_{-k}|^2 + |y_{-k}|^2) + w_{-(k-1)}(|x_{-(k-1)}|^2 + |y_{-(k-1)}|^2) + ... + w_0(|x_0|^2 + |y_0|^2) + ... + w_k(|x_k|^2 + |y_k|^2)] ,$$

dans la formule ci-dessus, wi(i=-k,-(k-1)...0...k) représente un coefficient pondéré de la valeur de puissance du point d'échantillonnage, xi(i=-k,-(k-1)...0...k) représente une valeur d'échantillonnage de l'état de polarisation X, et yi(i=-k,-(k-1)...0...k) représente une valeur d'échantillonnage de l'état de polarisation Y ;
le coefficient pondéré de la valeur de puissance de chaque point d'échantillonnage étant inversement proportionnel à une distance entre le point d'échantillonnage et le point d'échantillonnage de courant.

8. Procédé selon la revendication 6 ou 7, dans lequel,
   N est un nombre entier, et $2 \le N \le 5$.

9. Procédé selon la revendication 6 ou 7, dans lequel,
   K est un nombre entier, et $1 \le k \le 10$.

10. Système selon la revendication 7, dans lequel
    le coefficient pondéré de la valeur de puissance de chaque point d'échantillonnage est un nombre positif supérieur à 0.

X polarization state

16 QAM signal light
of a certain channel

Coherent receiver

X I

X Q

WDM
de-multiplexer

Local oscillation
light

Coherent receiver

Y I

Y Q

Y polarization state

DSP

Dispersion nonlinear compensation

Polarization de-crosstalk

Frequency phase noise compensation

Signal judgment and Bit error statistics

FIG. 1

N times (N is far less than a value required by the circulation of the
traditional reverse compensation algorithm)

16 QAM signal
of the X
polarization state

Dispersion
compensation

Dispersion
compensation

16 QAM
signal of the Y
polarization state

Dispersion
compensation

Nonlinear compensation

| |2   Weighted

| |2   Weighted

Σ

Multiplied by
the adjustment
factor W

*exp(-j· )

*exp(-j· )

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012051742 A1